# NEUE EUROPÄISCHE PATENTSCHRIFT

(11) **EP 3 028 842 B2**
(45) Veröffentlichungstag und Bekanntmachung des Hinweises auf die Entscheidung über den Einspruch: **08.10.2025**
(45) Hinweis auf die Patenterteilung: 03.06.2020
(21) Anmeldenummer: 15405060.3
(22) Anmeldetag: 06.11.2015
(51) Int. Cl.: B29C 64/153, B29B 13/10, B33Y 70/00, C08G 18/42, C08G 18/44, C08G 18/48, C08G 18/73, C08G 18/75, C09D 123/06, C09D 123/12, B29K 23/00, B29K 75/00, B29K 67/00, C08L 75/04

(54) **PULVERFÖRMIGE ZUSAMMENSETZUNGEN AUS THERMOPLASTISCHEN KUNSTSTOFFEN UND VERWENDUNG DER ZUSAMMENSETZUNGEN**
POWDER COMPOSITIONS MADE OF THERMOPLASTICS AND USE OF THE COMPOSITIONS
COMPOSITIONS EN POUDRE DE MATIÈRES SYNTHÉTIQUES THERMOPLASTIQUES ET UTILISATION DESDITES COMPOSITIONS

(30) Priorität: 02.12.2014 CH 18522014
(43) Veröffentlichungstag der Anmeldung: 08.06.2016
(73) Patentinhaber: AM POLYMERS GmbH, 47887 Willich (DE)
(72) Erfinder: Timur, Ünlü, CH-8052 Zürich (CH)
(74) Vertreter: Prinz & Partner mbB

(56) Entgegenhaltungen:
- EP-A1- 1 400 340
- EP-A1- 2 103 643
- EP-A1- 2 177 557
- EP-A2- 0 733 690
- EP-A2- 1 726 610
- EP-A2- 2 612 747
- EP-A2- 2 776 233
- WO-A1-2005/082973
- WO-A1-2014/075185
- WO-A1-2014/155156
- WO-A2-2007/114895
- WO-A2-2013/033273
- CN-A- 104 031 319
- JP-A- 2011 213 997
- JP-A- 2011 286 556
- US-A1- 2004 137 228
- US-A1- 2004 232 583
- US-A1- 2006 223 928
- US-A1- 2009 041 820
- US-A1- 2011 129 682
- US-A1- 2013 177 767
- C ARPAGAUS ET AL: "Short-time plasma surface modified polymer powders - Improved bonding and wettability", 18 October 2006 (2006-10-18), pages 1 - 6, XP055265608, Retrieved from the Internet <URL:http://www.ipe.ethz.ch/laboratories/ltr/publications/proceedings/Arpagaus_ISPC17_ID_477.pdf> [retrieved on 20160414]
- ZIEGELMEIER STEFAN ET AL: "An experimental study into the effects of bulk and flow behaviour of laser sintering polymer powders on resulting part properties", JOURNAL OF MATERIALS PROCESSING TECHNOLOGY, ELSEVIER, NL, vol. 215, 2 August 2014 (2014-08-02), pages 239 - 250, XP029064178, ISSN: 0924-0136, DOI: 10.1016/J.JMATPROTEC.2014.07.029
- "abifor Schmelzklebepulver / hot melt powders", 1 January 2013 (2013-01-01), pages 1 - 1, XP055266115, Retrieved from the Internet <URL:http://ch.abifor.com/upload/file/rewrite/Bekleidungsindustrie_3.pdf> [retrieved on 20160418]

## Beschreibung

Die Erfindung betrifft pulverförmige Zusammensetzungen auf der Grundlage von thermoplastischen Kunststoffen bei der Herstellung von dreidimensionalen Formkörpern in schichtweiser Fertigung, insbesondere durch Belichtungsverfahren wie Lasersintern oder Belichtungsschmelzen mittels absorptionsoptimierten Formulierungen. Ferner betrifft die Erfindung ein Verfahren zur Herstellung eines dreidimensionalen Formkörpers unter Verwendung der Zusammensetzungen in schichtweisen Fertigungsverfahren.

Die schnelle und kostengünstige Bereitstellung von Prototypen (Rapid-Prototyping) ist eine in der jüngsten Zeit häufig gestellte Aufgabe. Besonders geeignet sind Verfahren, die auf der Basis von pulverförmigen Werkstoffen arbeiten, und bei denen schichtweise durch selektives Aufschmelzen und Verfestigen die gewünschten Strukturen hergestellt werden. Die Verfahren sind auch für die Herstellung von Kleinserien geeignet.

Ein besonders gut für den Zweck des Rapid-Prototyping oder die Herstellung von Bauteilen in Kleinserien geeignetes Verfahren ist das selektive Sintern wie das HP Multi Jet Fusion^{™}. Bei diesem Verfahren werden Kunststoffpulver in einer Kammer selektiv mit einem flüssigen Absorber bedruckt, kurz belichtet, wodurch die mit dem Absorber bedeckten Pulver-Partikel schmelzen. Die geschmolzenen Partikel laufen ineinander und erstarren schnell wieder zu einer festen Masse. Durch wiederholtes Belichten von immer neu aufgebrachten Schichten können mit diesem Verfahren dreidimensionale Körper einfach und schnell hergestellt werden.

Für das Verfahren HP Multi Jet Fusion^{™} können Kunstoffpulver aus Polyester, Polyvinylchlorid, Polyacetal, Polypropylen, Polyethylen, Polystyrol, Polycarbonat, Poly-(N-methylmethacrylimide) (PMMI), Polymethylmethacrylat (PMMA) und Polyamid oder Gemische davon verwendet werden.

Die Verwendung von Pulvern aus thermoplastischen Kunststoffen für die Zwecke des selektiven Lasersinterns ist aus der DE 10 2010 062 875 und für das Belichtungsschmelzen mittels absorptionsoptimierten Formulierungen aus der US 2014/0212532 A1 sowie der WO 2014/077848 A1 bekannt. Die thermoplastischen Pulver werden dort zur Herstellung von Kraftfahrzeugbauteilen durch Lasersintern bzw. Bauteilen durch Belichtungsschmelzen mittels absorptionsoptimierten Formulierungen eingesetzt.

Die Herstellung von thermoplastischem TPU ist beispielsweise in der DE 198 00 287 A1, der DE 10 2006 021 734 A1 und der DE 10 2008 006 004 B3 beschrieben, die Herstellung von thermoplastischem HDPE ist beispielsweise in der DE 4241533 C2 beschrieben, die Herstellung von thermoplastischem CoPA ist beispielsweise in der EP 0707027 B1 beschrieben, die Herstellung von thermoplastischem CoPES ist beispielsweise in der EP1310516 B1 beschrieben und die Herstellung von thermoplastischem PP ist beispielsweise in der WO 1993005082 A1 beschrieben, auf die Bezug genommen wird. Verweise auf weitere thermoplastische Copolyester finden sich in der EP 0 733 690 A2. C. Arpagaus et al., "Short-time plasma surface modified polymer powders - Improved bonding and wettability", 18. Oktober 2006, Seiten 1-6, nimmt Bezug auf ein weiteres HDPE-Pulver.

Für die Anwendung geeigneter thermoplastischer Kunststoffpulver und deren Anreicherung mit Füllstoffen (Minimierung der Varianz der mechanischen Eigenschaften von Bauteilen) oder Absorbern (zur signifikanten Erhöhung der elektromagnetischen Absorptionsfähigkeit) in Lasersinterverfahren bzw. in Belichtungsverfahren mittels flächiger Infrarotheizungen sind in US 6 136 948, WO 96/06881, DE 10 2004 012 682, DE 10 2004 012 683 und DE 10 2004 020 452 beschrieben.

Die bisher für diese Verfahren eingesetzten thermoplastischen Kunststoffpulver weisen einen hohen Schmelzpunkt von über 150 °C und eine relativ hohe Schmelzviskosität auf. Die Pulver sind außerdem nur eingeschränkt recyclingfähig. Die aus den bekannten thermoplastischen Kunststoffpulvern hergestellten Bauteile zeigen zwar gute mechanische Eigenschaften. Sie können aber Oberflächendefekte wie Einfallstellen aufweisen.

Aus der US 2013/0177767 A1 ist eine Vorrichtung zur schichtweisen Herstellung von dreidimensionalen Objekten bekannt, die einen Bauraum mit einer höheneinstellbaren Bauplattform, eine Vorrichtung zum Aufbringen einer Schicht eines durch Einwirkung elektromagnetischer Strahlung verfestigbaren Materials auf die Bauplattform, eine Bestrahlungseinrichtung mit einer elektromagnetische Strahlung emittierenden Strahlungsquelle, eine Steuerungseinheit und eine im Strahlengang der elektromagnetischen Strahlung befindliche Linse umfasst. Die Vorrichtung zum Aufbringen einer Schicht des verfestigbaren Materials ist als Schieber ausgeführt, dessen der Schicht des verfestigbaren Materials zugewandte Kante als nicht durchgehende Gerade ausgeführt ist, und der senkrecht zu der Auftragsrichtung und parallel zur Baufeldebene bewegt werden kann. In einer der beschriebenen Ausführungsformen kann das verfestigbare Material ein Polypropylen-Pulver mit einem Schmelzpunkt von 139 °C sein.

Es besteht daher weiter Bedarf an Kunststoffpulvern zur Verwendung in Lasersinterverfahren bzw. in flächigen Belichtungsverfahren, die einen geringen Energieverbrauch auf der Lasersinter-. bzw. Inkjetmaschine aufweisen und gleichzeitig eine hohe Bauteilqualität erreichen.

Erfindungsgemäß wird diese Aufgabe durch eine pulverförmige Zusammensetzung gemäß Anspruch 1 gelöst.

Die erfindungsgemäßen pulverförmigen Zusammensetzungen zur Verwendung bei der Herstellung von dreidimensionalen Formkörpern in schichtweiser Fertigung enthalten wenigstens ein Pulver aus einem thermoplastischen Polypropylen (PP), und ist dadurch gekennzeichnet, dass das Pulver die folgenden Parameter aufweist:
Schmelztemperatur: 125-155 °C
Schmelzflussindex (160 °C, 2.16kg): 2 - 30 g/10min
Mittlere Teilchengrösse d50: 40-70 µm
Teilchengrösse: 1-80 µm.

Weitere Ausführungsformen der Erfindung sind in den Unteransprüchen angegeben, die wahlweise miteinander kombiniert werden können.

Die pulverförmigen Zusammensetzungen eignen sich zur Verwendung bei der Herstellung von dreidimensionalen Formkörpern in schichtweiser Fertigung, insbesondere durch selektives Lasersintern bzw. Belichtungsverfahren mittels flächiger elektromagnetischer Strahlung. Die niedrige Schmelztemperatur der Kunststoffpulver aus dem thermoplastischen Polypropylen erlaubt eine weitere Absenkung der Prozesstemperatur des Lasersinterns bzw. der eingetragenen flächigen Belichtungsleistung. Das Pulverbett muss daher nicht übermäßig erwärmt werden. Auch die Energiedichte des elektromagnetischen Eintrags kann reduziert werden. Damit können die Herstellprozesse von dreidimensionalen Formkörpern in schichtweiser Fertigung energiesparend durchgeführt werden.

Die geringere Temperaturbelastung der Kunststoffpulver während der Herstellprozesse erhöht auch die Wiederverwendbarkeit des nicht versinterten Materials. Die erfindungsgemäße Zusammensetzung zeigt keine Vergilbung und lässt sich bis zu 6-fach wiederverwenden.

Außerdem führen die niedrige Schmelztemperatur des in der erfindungsgemäßen Zusammensetzung verwendeten Kunststoffpulvers und dessen niedrige Schmelzviskosität dazu, dass die Herstellprozesse mit einer einfachen Belichtung bzw. kürzeren Belichtungszeit des sinterfähigen Materials durchgeführt werden kann. Mehrfachbelichtungen bzw. längere Belichtungszeiten, wie im Stand der Technik üblich, müssen nicht durchgeführt werden.

Durch die niedrige Schmelzviskosität (hoher Schmelzfluss) der Kunststoffpulver in den erfindungsgemäßen Zusammensetzungen weisen die daraus hergestellten Bauteile schließlich eine hohe Oberflächengüte und eine gute Kantenschärfe auf. Eine Nachbearbeitung ist daher regelmäßig nicht notwendig.

Geeignete Polypropylene (PP) sind teilkristalline Thermoplasten und gehören zu der Gruppe der Polyolefine. Die Polymerisation des Monomers Propen wird mit Hilfe von Katalysatoren gewonnen. Die Wiederholungseinheiten lauten Poly(1-methylethylen). Die Methylreste (CH₃-Reste) können isotaktisch, syndiotaktisch oder ataktisch angeordnet sein.

Die Herstellung der genannten thermoplastischen Kunststoffpulver für die erfindungsgemäßen Zusammensetzungen erfolgt vorzugsweise durch mechanische Bearbeitung, z. B. durch Mahlen, insbesondere durch kryogenes Mahlen, aus einem thermoplastischen Kunststoff. Beispielsweise kann ein gegossener Polyurethanblock mit flüssigem Stickstoff abgekühlt und mittels einer Mühle zu feinem, pulverförmigen Material vermahlen werden. Durch Aussieben des pulverförmigen Materials nach dem Mahlen wird eine Siebfraktion des Kunststoffpulvers mit der gewünschten Korngrößenverteilung erhalten.

Die Korngrößenverteilungen der Kunststoffpulver betragen von 0 bis 80 µm, vorzugsweise 1 bis 80 µm, bevorzugt 1 bis 65 µm und besonders bevorzugt 1 bis 55 µm.

Der zahlenmittlere Korndurchmesser für die Kunststoffpulver d50 liegt bei 40 bis 70 µm, vorzugsweise zwischen 60 und 70 µm.

Aufgrund der eng begrenzten Korngrößenverteilung sind geringere Schichtdicken des Pulverbetts von unter 100 µm erreichbar. Somit lassen sich noch feinere Strukturen durch Lasersintern bzw. Belichtungsverfahren mittels flächiger elektromagnetischer Strahlung herstellen.

Der Schmelzflussindex der in den erfindungsgemäßen Zusammensetzungen verwendeten Kunststoffpulver bei 160 °C (2.16 kg) beträgt erfindungsgemäß von 2 - 30 g/10min, gemessen nach ISO 1133.

Die Schmelztemperatur der Kunststoffpulver beträgt erfindungsgemäß höchstens 155 °C. Gemäß der bevorzugten Ausführungsformen beträgt die Schmelztemperatur höchstens 152 °C, weiter bevorzugt höchstens 148 °C, weiter bevorzugt höchstens 147 °C und besonders bevorzugt höchstens 146 °C.

Die Schüttdichte der Kunststoffpulver in der erfindungsgemäßen Zusammensetzung beträgt vorzugsweise mindestens 330 g/l, gemessen nach DIN EN ISO 60. Gemäß der bevorzugten Ausführungsformen beträgt die Schüttdichte bis zu 680 g/l, bevorzugt bis zu 670 g/l, weiter bevorzugt bis zu 665 g/l, weiter bevorzugt bis zu 660 g/l, weiter bevorzugt bis zu 655 g/l, und besonders bevorzugt bis zu 650 g/l.

Die hohe Schüttdichte der Kunststoffpulver in der erfindungsgemäßen Zusammensetzung führt im Vergleich zu den bekannten Kunststoffpulvern zu einer besseren Dosierbarkeit und einer besseren Rieselfähigkeit. Beim schichtweisen Auftragen des Pulverbetts entstehen somit weniger Ausschlussstellen. Dadurch wird die Qualität des durch Lasersintern bzw. durch ein Belichtungsverfahren mittels flächiger elektromagnetischer Strahlung hergestellten Formkörpers weiter verbessert.

In der pulverförmigen Zusammensetzung liegen die Kunststoffpulver vorzugsweise in einem Anteil von mindestens 30 Gew.-% vor. Bevorzugt liegt der Anteil bei mindestens 50 Gew.-%, vorzugsweise mindestens 70 Gew.-%, weiter vorzugsweise mindestens 80 Gew.-%, weiter vorzugsweise mindestens 90 Gew.-% und besonders bevorzugt mindestens 99 Gew.-%, jeweils bezogen auf das Gesamtgewicht der Zusammensetzung.

Gemäß einer weiteren Ausführungsform enthalten die pulverförmigen Zusammensetzungen ferner ein antibakterielles Mittel, vorzugsweise in einem Anteil von bis zu 30 Gew.-%. Bevorzugt beträgt der Anteil des antibakteriellen Mittels mindestens 0,1 Gew.-% und bis zu 20 Gew.-%, vorzugsweise bis 10 Gew.-%, weiter vorzugsweise bis zu 8 Gew.-%, weiter vorzugsweise bis zu 4 Gew.-% und besonders bevorzugt bis zu 2 Gew.-%, jeweils bezogen auf das Gesamtgewicht der Zusammensetzung.

Das antibakterielle Mittel ist beispielsweise ein Metallpulver wie Silber, Zink oder Kupfer, oder ein Salz oder Komplex davon. Beispiele für geeignete antibakterielle Mittel sind Zinkpyrithion, Triclosan, Nanosilber und/oder Silber-Zink-Zeolith.

Überraschenderweise wurde gefunden, dass das antibakterielle Mittel in den erfindungsgemäßen Zusammensetzungen stabil gegenüber den Bedingungen des Lasersinterns bzw. Belichtungsverfahren mittels flächiger elektromagnetischer Strahlung ist. Insbesondere tritt keine Agglomeration der Pulverteilchen während des Sintervorgangs ein. Der Zusatz des antibakteriellen Mittels erlaubt daher die einfache und kostengünstige Herstellung von Formkörpern für medizinische Anwendungen, bei denen antibakterielle Eigenschaften gewünscht sind.

Desweiteren können die erfindungsgemäßen Zusammensetzungen eine oder mehrere Rieselhilfen wie gefällte oder pyrogene Kieselsäuren und/oder Aluminumsilikate enthalten. Die Rieselhilfen können in einem Anteil von bis zu 10 Gew.-%, vorzugsweise 0,1 bis 8 Gew.-%, weiter vorzugsweise bis 6 Gew-%, weiter vorzugsweise bis 4 Gew-%, weiter vorzugsweise bis 3 Gew-%, und besonders bevorzugt bis 2 Gew.-% eingesetzt werden, jeweils bezogen auf das Gesamtgewicht der Zusammensetzung.

Gemäß weiterer Ausführungsformen können die pulverförmigen Zusammensetzungen ein oder mehrere Antistatika wie Aluminiumoxid oder Ruß enthalten. Die Antistatika liegen vorzugweisen in einem Anteil von bis zu 10 Gew.-%, vorzugsweise 0,1 bis 8 Gew.-%, weiter vorzugsweise bis 6 Gew.-%, weiter vorzugsweise bis 4 Gew.-%, weiter vorzugsweise bis 2 Gew.-%, und besonders bevorzugt bis 1 Gew.-% in der Zusammensetzung vor.

Darüber hinaus kann die Zusammensetzung noch übliche Hilfs- und Füllstoffe enthalten, beispielsweise organische oder anorganische Pigmente wie Titandioxid und Füllstoffe wie Glaspulver, wie sie im Stand der Technik bekannt sind.

Die Korngröße der Zuschlagstoffe, einschließlich des antibakteriellen Mittels, der Rieselhilfen und Antistatika sowie der weiteren Hilfs- und Füllstoffe, liegt vorzugsweise im Bereich der Korngröße der Kunststoffpulver.

Die mit der erfindungsgemäßen Zusammensetzung hergestellten Bauteile zeigen außerdem gute mechanische Eigenschaften. Der Dichteverlust gegenüber dem eingesetzten pulverförmigen Material liegt üblicherweise unter 10 %, vorzugsweise zwischen 4 und 10 %. Die vorteilhaften mechanischen Eigenschaften der Kunststoffpulver bleiben daher weitgehend erhalten.

Gegenstand der Erfindung ist ferner das Verfahren zur Herstellung der Formkörper durch selektives Lasersintern bzw. Belichtungsverfahren mittels flächiger elektromagnetischer Strahlung unter Verwendung der erfindungsgemäßen Zusammensetzungen.

Weiter ist die Erfindung auf die Verwendung von thermoplastischen PP-Pulvern bei der Herstellung von Formkörpern durch schichtweise Fertigungsverfahren wie selektives Lasersintern bzw. Belichtungsverfahren mittels flächiger elektromagnetischer Strahlung gerichtet, wobei die Kunststoffpulver eine Zusammensetzung gemäß einem der Ansprüche 1 bis 5 aufweist.

Weitere Vorteile der Erfindung ergeben sich aus der nachfolgenden Beschreibung der Ausführungsbeispiele, die jedoch nicht in einem einschränkenden Sinn verstanden werden soll.

Es wurden jeweils separat PP-Pulver durch kryogenes Vermahlen der jeweiligen einzelnen PP-Blöcke unter Einwirkung von flüssigem Stickstoff hergestellt und ausgesiebt. Die eingesetzten thermoplastischen Kunststoffe hatten jeweils folgende Schmelztemperaturen und Schmelzflussindizes:
PP-Pulver-1:
   Schmelztemperatur 150 ± 5 °C
   Schmelzflussindex bei 160°C (2.16 kg) von 12 ± 5 g/10min.
PP-Pulver-2:
   Schmelztemperatur 130 ± 5 °C
   Schmelzflussindex bei 160°C (2.16 kg) von 3 ± 2 g/10min.

Die für das Lasersintern und das Belichtungsverfahren mittels flächiger elektromagnetischer Strahlung verwendeten Siebfraktionen hatten folgende Korngrößenverteilung (Siebanalyse nach DIN 53734):

**PP-Pulver-1:**

| | |
|---|---|
| 0 - 32 µm | 21,0 % |
| 0 - 50 µm | 47,5 % |
| 0 - 63 µm | 72,5 % |
| 0 - 80 µm | 100,0 % |

Das Schüttgewicht des so erhaltenen PP-Pulver betrug 364 g/l, gemessen nach DIN EN ISO 60.

**PP-Pulver-2:**

| | |
|---|---|
| 0 - 32 µm | 7,5 % |
| 0 - 50 µm | 24,5 % |
| 0 - 63 µm | 54,5 % |
| 0 - 80 µm | 100,0 % |

Das Schüttgewicht des so erhaltenen PP-Pulver betrug 373 g/l, gemessen nach DIN EN ISO 60.

### Bauprozesse zur Erstellung von Dichtewürfeln

Die so erhaltenen Kunststoffpulver wurden auf einer handelsüblichen Lasersintermaschine bei einer Temperatur des Pulverbetts kurz vor ihrem jeweiligen Schmelzpunkt einzeln verbaut, so dass für jede der erfindungsgemäßen pulverförmigen Zusammensetzungen einzelne Bauprozesse durchgeführt wurden. Der eingesetzte CO₂-Laser (Arbeitswellenlänge λ = 10,6 µm) wurde mit einer Leistung von 20 ± 10 Watt betrieben.

Mittels eines flächen Infrarotstrahlers (Arbeitswellenlänge λ = 2,0 bis 10,0 µm) mit 1 bis 28 Watt/cm² wurden die jeweiligen erfindungsgemäßen pulverförmigen Zusammensetzungen im zugehörigen Pulverbett belichtet. Um ein selektives Aufschmelzen hervorzurufen, wurden für jedes der Kunststoffpulver 3 Varianten erstellt, so dass eine weißlich naturfarbene, eine schwarze mit 6 Gew.-% Ruß (Orion PRINTEX^{®} A) vermischt und eine schwarze mit 6 Gew.-% Druckertinte (handelsüblich HP 940) vermischt vorlagen. Die schwarzen pulverförmigen Zusammensetzungen waren somit signifikant in ihrer Absorptionsfähigkeit erhöht, so dass während des flächigen Belichtungsvorgangs die Temperaturunterschiede zwischen weißlich naturfarbenen und den schwarzen pulverförmigen Zusammensetzungen in Abhängigkeit von der Belichtungszeit und Belichtungsleistung gemessen wurde. Je grösser die Temperaturdifferenz (ΔT) nahe dem Schmelzpunkt zwischen den schwarzen Pulvermischungen und dem weißen naturfarbenen Pulver war, desto homogener und dichter wurden die daraus erhaltenen dreidimensionalen Formkörper.

Eigenschaften der dreidimensionalen Formkörper die aus den unterschiedlichen erfindungsgemäßen pulverförmigen Zusammensetzungen mittels der beiden Verfahren erstellt wurden sind in den nachfolgenden Tabellen 1-4 angegeben.

**Tabelle 1: PP-Pulver-1**

| | Nominal | Lasergesintert | Infrarotstrahler Belichtet |
|---|---|---|---|
| Dichte (ISO 1183) | 0,90 g/cm3 | ~0.84 g/cm3 | ~0.80 g/cm3 |
| ΔT | - | - | ~10 °C |

**Tabelle 2: PP-Pulver-2**

| | Nominal | Lasergesintert | Infrarotstrahler Belichtet |
|---|---|---|---|
| Dichte (ISO 1183) | 0,895 g/cm3 | ~0.86 g/cm3 | ~0.81 g/cm3 |
| ΔT | - | - | ∼8 °C |

## Patentansprüche

1. Pulverförmige Zusammensetzung zur Verwendung bei der Herstellung von dreidimensionalen Formkörpern in schichtweiser Fertigung, wobei die Zusammensetzung wenigstens ein Pulver aus einem thermoplastischen Polypropylen (PP) enthält, und wobei das Pulver die folgenden Parameter aufweist:
Schmelztemperatur: 125-155 °C
Schmelzflussindex, 160 °C, 2.16kg: 2 - 30 g/10min
Mittlere Teilchengrösse d50: 40-70 µm
Teilchengrösse: 1-80 µm.

2. Zusammensetzung nach Anspruch 1, **dadurch gekennzeichnet, dass** das Kunststoffpulver eine Schüttdichte von mindestens 330 g/l, vorzugsweise 350 bis 650 g/l aufweist.

3. Zusammensetzung nach Anspruch 1, **dadurch gekennzeichnet, dass** das Kunststoffpulver durch Kaltmahlen eines thermoplastischen Kunststoffs unter Bildung eines gemahlenen Pulvers und Sieben des gemahlenen Pulvers unter Abtrennung einer Siebfraktion des Kunststoffpulvers hergestellt ist.

4. Zusammensetzung nach Anspruch 1, **dadurch gekennzeichnet, dass** das Kunststoffpulver in einem Anteil von mindestens 30 Gew.-%, vorzugsweise bis zu 99 Gew.-%, in der Zusammensetzung vorliegt.

5. Zusammensetzung nach Anspruch 1, **dadurch gekennzeichnet, dass** die Zusammensetzung ferner ein antibakterielles Mittel enthält, welches aus Metallpulvern von Ag, Zn und Cu, Salzen und Komplexen von Ag, Zn und Cu, Zinkpyrithion, Triclosan und Silber-Zink-Zeolith bestehenden Gruppe ausgewählt ist.

6. Verfahren zur Herstellung eines Formkörpers, die auf der Basis von pulverförmigen Werkstoffen unter Verwendung einer Zusammensetzung gemäß einem der vorhergehenden Ansprüche arbeiten, und bei denen schichtweise durch selektives Aufschmelzen und Verfestigen die gewünschten Strukturen hergestellt werden.

7. Verwendung einer Zusammensetzung gemäß einem der Ansprüche 1 bis 5 bei der Herstellung eines Formkörpers, der schichtweise durch selektives Aufschmelzen erstellt wird.

## Claims

1. A powder composition for use in manufacturing three-dimensional shaped bodies in a production in layers, the composition containing at least one powder made of a thermoplastic polypropylene (PP), and the powder having the following parameters:
melting temperature: 125-155 °C
melt flow index, 160 °C, 2.16 kg: 2 - 30 g/10min
mean particle size d50: 40-70 µm
particle size: 1-80 µm.

2. The composition according to claim 1, **characterized in that** the plastic powder has a bulk density of at least 330 g/l, preferably 350 to 650 g/l.

3. The composition according to claim 1, **characterized in that** the plastic powder is manufactured by cold-grinding a thermoplastic material to form a ground powder and screening the ground powder to separate a screening fraction of the plastic powder.

4. The composition according to claim 1, **characterized in that** the plastic powder is present in the composition in a proportion of at least 30% by weight, preferably up to 99% by weight.

5. The composition according to claim 1, **characterized in that** the composition further contains an antibacterial agent selected from the group consisting of metal powders of Ag, Zn and Cu, salts and complexes of Ag, Zn and Cu, zinc pyrithione, triclosan and silver-zinc zeolite.

6. Methods of manufacturing a shaped body which operate on the basis of powder materials using a composition according to any of the preceding claims, and in which the desired structures are manufactured layer by layer by selective melting and consolidation.

7. Use of a composition according to any of claims 1 to 5 in manufacturing a shaped body which is prepared layer by layer by selective melting.

## Revendications

1. Composition en poudre pour l'utilisation lors de la fabrication de corps moulés à trois dimensions dans une production par couches, la composition contenant au moins une poudre d'un polypropylène (PP) thermoplastique, et la poudre présentant les paramètres suivants :
température de fusion : 125-155°C
indice de fluidité, 160°C, 2,16 kg : 2-30 g/10min
taille moyenne des particules d50 : 40-70 µm
taille des particules : 1-80 µm.

2. Composition selon la revendication 1, **caractérisée en ce que** la poudre de matière plastique présente une masse volumique apparente d'au moins 330 g/l, de préférence de 350 à 650 g/l.

3. Composition selon la revendication 1, **caractérisée en ce que** la poudre de matière plastique est fabriquée par broyage à froid d'une matière plastique thermoplastique en formant une poudre broyée, et par tamisage de la poudre broyée en séparant une fraction granulométrique de la poudre de matière plastique.

4. Composition selon la revendication 1, **caractérisée en ce que** la poudre de matière plastique est présente dans la composition dans une proportion d'au moins 30% en poids, de préférence jusqu'à 99% en poids.

5. Composition selon la revendication 1, **caractérisée en ce que** la composition contient en outre un agent antibactérien qui est choisi dans le groupe constitué de poudres métalliques de Ag, Zn et Cu, de sels et de complexes de Ag, Zn et Cu, de pyrithione de zinc, de triclosan et de zéolite d'argent et de zinc.

6. Procédés de fabrication d'un corps moulé travaillant sur la base de matériaux en poudre en utilisant une composition selon l'une des revendications précédentes, et dans lesquels les structures souhaitées sont fabriquées par couches par fusion sélective et consolidation.

7. Utilisation d'une composition selon l'une des revendications 1 à 5 lors de la fabrication d'un corps moulé qui est réalisé par couche par fusion sélective.
